# EUROPÄISCHE PATENTSCHRIFT

(11) **EP 2 822 900 B1**
(45) Veröffentlichungstag und Bekanntmachung des Hinweises auf die Patenterteilung: **13.12.2017**
(21) Anmeldenummer: 13715618.8
(22) Anmeldetag: 08.03.2013
(51) Int. Cl.: C02F 3/30, C02F 3/00

(54) **VORRICHTUNG UND BIOLOGISCHES VERFAHREN MIT TEILWEISE IONISIERTEM GASSTROM**
INSTALLATION AND BIOLOGICAL PROCESS INVOLVING TREATMENT WITH AT LEAST PARTIALLY IONIZED GAS STREAM
INSTALLATION ET PROCÉDÉ BIOLOGIQUE AVEC TRAITEMENT AVEC FLUX DE GAZ ETANT AU MOINS PARTIELLEMENT IONISÉ

(30) Priorität: 09.03.2012 EP 12158877
(43) Veröffentlichungstag der Anmeldung: 14.01.2015
(73) Patentinhaber: ionOXess GmbH, 6020 Innsbruck (AT)
(72) Erfinder: OBHOLZER, Thomas, A-6391 Fieberbrunn (AT); RUPPRICH, Marco, A-6094 Axams (AT)
(74) Vertreter: Vossius & Partner Patentanwälte Rechtsanwälte mbB
(86) Internationale Anmeldenummer: PCT/EP2013/054737
(87) Internationale Veröffentlichungsnummer: WO 2013/132067

(56) Entgegenhaltungen:
- EP-A1- 0 835 845
- EP-A1- 2 354 096
- FR-A- 1 557 156
- US-A- 4 214 887
- US-B1- 6 337 020
- US-B2- 7 056 437

## Beschreibung

Die vorliegende Erfindung betrifft ein Verfahren zur Behandlung bzw. Aufbereitung von Wasser in einer Aufbereitungsanlage sowie eine entsprechende Aufbereitungsanlage. Insbesondere betrifft die Erfindung eine Aufbereitungsanlage sowie ein Verfahren zur Reduktion der Schlamm- oder Schaumbildung in der Abwasseraufbereitung.

### HINTERGRUND DER ERFINDUNG

Abwässer aus Industrie und Haushalt können auf unterschiedliche Arten in Kläranlagen aufbereitet werden. Üblicherweise werden Abwässer in mehreren Stufen aufbereitet, wobei eine dieser Aufbereitungsstufen häufig als biologische Aufbereitungsstufe realisiert wird. Ein Großteil der biologischen Kläranlagen wird nach dem sogenannten "Belebungsverfahren" betrieben. Dieses Verfahren beruht auf der Reinigung des Abwassers durch Mikroorganismen in einem Belebungsbecken. Durch die Mikroorganismen wird das biologisch abbaubare Material umgesetzt wodurch Schlamm entsteht, der aus der Aufbereitungsstufe abgeführt werden muss. Insbesondere befinden sich die Mikroorganismen in Schlammflocken, welche im Nachklärbecken wiederum vom gereinigten Wasser abgetrennt werden müssen. Schaum, Bläh- oder Schwimmschlamm beeinträchtigen diese Abtrennung massiv und führen zu großen Problemen und hohen Kosten.

Betreiber von Kläranlagen, kämpfen seit Jahren mit immer höheren Kosten, welche hauptsächlich aufgrund von einer starken Zunahme von Bläh- und Schwimmschlamm und von stetig steigendem Aufwand für die Überschussschlammentsorgung hervorgerufen wurden.

Zudem gehört heute zum Standard moderner Kläranlagen die weitergehende Stickstoffelimination. In Folge dieser Technologie entstanden aber auch neue biologische Situationen. Immer mehr Anlagen haben Probleme mit fadenförmigen Bakterien wie *Microthrix parvicella* und *Nocardioforme Actinomyceten* (*Nocardia*) die unter anderem für die Bildung von Schaum-, Bläh- oder Schwimmschlamm verantwortlich sind. Inzwischen sind bei ca. 80 % aller kommunalen Kläranlagen saisonal oder ganzjährig fadenförmige Bakterien feststellbar und diese führen häufig zu Problemen mit Blähschlamm, Schwimmschlamm oder Schaum. Die Bekämpfung dieses Blähschlamms erfolgt bislang in der Regel mit aluminiumhaltigen Fällmitteln. Die Ursachen werden damit aber nicht beseitigt. Insbesondere in den letzten Jahren werden ein verstärktes Wachstum dieser fadenförmigen Bakterien und somit starke Bläh- und Schwimmschlammprobleme beobachtet.

Bei der Bekämpfung von fadenförmigen Bakterien mit Aluminiumpräparaten fallen im Schnitt bei einem Klärwerk (30.000 EW) ca. 60.000 Euro pro Jahr an. Aufgrund der steigenden Preise für diese Aluminiumsalze, erhöhen sich diese Kosten jährlich. Des Weiteren finden sich im Zuge dieser Behandlung ca. 30-50 mg Aluminium pro g Trockensubstanz (TS) im Überschussschlamm. Versuche zeigen, dass sich bereits kleine Konzentrationen an Aluminium oder Eisen hemmend auf die Gasproduktion in der Faulung auswirken. Somit sind auch Kosten für eine geringere Stromproduktion mittels Klärschlamm einzukalkulieren. Bisher sind noch keine Grenzwerte von Aluminium im Überschussschlamm (Kompostverordnung) vorgeschrieben, jedoch sind zukünftige Verschärfungen nicht auszuschließen. Zusätzlich fallen bei der Verwendung von Aluminiumpräparaten Personalkosten an. Verschiedene Untersuchungen zeigen, dass zur Bekämpfung von *Microthrix parvicella* Mehrkosten von ca. 2 Cent pro m³ Abwasser veranschlagt werden. Das heißt, dass pro EW und Jahr Mehrkosten von 2 - 2,5 EUR zu erwarten sind.

Alternative Verfahren zur Bekämpfung von fadenförmigen Bakterien inkl. der beschriebenen zusätzlichen Vorteile wie Volumenverringerung von Überschussschlamm und der Reduzierung der anthropogenen organischen Spurenstoffe in einem Schritt, sind mittlerweise beschrieben und angewandt worden.

Zu nennen wären hier beispielsweise Verfahren auf Ozon Basis, wie beispielsweise in den Anmeldungen DE 10 2007 060 914, DE 102 15 413, EP 2354096 und US 2006/0086661 beschrieben. In diesen Verfahren wird dem Belebungsbecken ein Trennraum nachgeschaltet in dem eine Trennung des Wassers in eine Wasserphase und eine Schlammphase durchgeführt wird. Die Wasserphase wird aus dem Trennraum über eine Wasserableitung abgeführt. Die Schlammphase wird über eine Rückführleitung aus dem Trennraum abgeführt. Insbesondere wird in diesen Verfahren Ozon in den Rücklaufschlamm eingebracht. Diese Verfahren haben jedoch ebenfalls Nachteile. Beispielsweise sind bei diesen Verfahren große Umbauten nötig, da Rohrleitungen verlegt werden müssen (hier wird ein Teilstrom des Rücklaufschlamms behandelt). Zudem kommt das Oxidationsmittel (Ozon) nur mit dem Rücklaufschlamm in Berührung und dadurch werden die im Wasser gelösten anthropogenen organischen Spurenstoffe nicht ausreichend reduziert. Die Ozonerzeugung benötigt in der Regel Reinsauerstoff; dadurch werden die Betriebskosten und der Platzbedarf signifikant erhöht. Schließlich ist die Ozonerzeugung sehr energieaufwändig.

Es ist daher eine Aufgabe der vorliegenden Erfindung die oben genannten Nachteile des Standes der Technik zu überwinden und eine verbesserte Aufbereitungsanlage und insbesondere ein energieeffizienteres Verfahren bereitzustellen, das dennoch wirkungsvoll die Bildung von Blähschlamm reduziert. Insbesondere ist es eine Aufgabe der vorliegenden Erfindung, eine Verbesserung eines biologischen Abbaus in einem wässrigen Medium so zu vereinfachen und zu verbessern, dass eine einfache und effiziente Behandlung, vorzugsweise ohne Zugabe von Chemikalien oder Ozon ermöglicht wird.

Die Aufgabe(n) der vorliegenden Erfindung wird/werden durch die unabhängigen Vorrichtungs- bzw. Verfahrensansprüche bzw. die unten diskutierten Aspekte gelöst. Die abhängigen Ansprüche beschreiben weitere bevorzugte Ausführungsformen und Abwandlungen der Erfindung.

### ZUSAMMENFASSUNG DER ERFINDUNG

Da das erfindungsgemäße Verfahren insbesondere im Zusammenhang mit Belebtschlammverfahren verwendet wird, wird nachfolgend dieses Verfahren im Detail beschrieben. Insbesondere ist das erfindungsgemäße Verfahren vielfach anwendbar, da heute ein Großteil der kommunalen Kläranlagen in Mitteleuropa nach dem Belebtschlammverfahren betrieben werden. Dabei werden in sogenannten Belebungsbecken durch Belüften des mit Belebtschlamm (Massen von flockig aggregierten Bakterien) versetzten Abwassers die Abwasserinhaltsstoffe des frischen Abwassers biotisch oxidativ abgebaut. Dabei werden von aeroben (Sauerstoff verbrauchenden) Bakterien und anderen Mikroorganismen Kohlenstoffverbindungen größtenteils zu Kohlenstoffdioxid abgebaut und teilweise zu Biomasse umgesetzt sowie der Stickstoff aus den organischen Verbindungen durch wieder andere Bakterien zunächst als Ammoniak abgespalten und dieses mit Sauerstoff zu Nitrat oxidiert (Nitrifikation). Das Belebtschlammverfahren wird zumeist mit kontinuierlichem Durchlauf betrieben, das heißt, in das Belebungsbecken läuft kontinuierlich Abwasser zu und kontinuierlich läuft im selben Maß Belebtschlamm enthaltendes Wasser ab. Optional kann durch die Zugabe von Fällmitteln mittels chemischer Reaktionen außerdem der Nährstoff Phosphor entfernt werden, gegebenenfalls durch Simultanfällung. Dies kann zudem die Absetzeigenschaften des Belebtschlammes im Nachklärbecken verbessern.

Es gibt verschiedene technische Ausführungsvarianten des Belebtschlammverfahrens, zum Beispiel vorgeschaltete und nachgeschaltete sowie simultane Denitrifikation. Hierbei finden die Nitrifikation und Denitrifikation entweder im selben oder in getrennten Becken, hier dann in unterschiedlicher Anordnung zueinander, statt. Eine Sonderform stellt das SBR-Verfahren dar (SBR = Sequence Batch Reactor), das die biologische Reinigung und die Nachklärung in einem einzigen Becken vereinigt. Hierbei läuft das Abwasser nicht kontinuierlich zu, sondern immer nur eine begrenzte Menge, die dann nach dem Belebtschlammverfahren gereinigt wird (Nitrifikation und Denitrifikation), anschließend erfolgt im selben Becken die Absetzphase (also die Nachklärung), und abschließend wird der Zuwachs an Belebtschlamm teilweise oder vollständig entfernt. Beim SBR-Verfahren wird folglich ein vorgeschaltetes Pufferbecken benötigt, in dem die während des Reinigungsvorganges weiterhin zulaufende Abwassermenge zwischengespeichert wird.

Erfindungsgemäß wird der Belebtschlamm nicht einfach mit Luft (Umgebungsluft) belüftet, sondern zumindest teilweise mit ionisiertem Gas. Vorzugsweise wird die Umgebungsluft mittels Ionisationseinrichtung ionisiert, wobei durch diese Ionisation zumindest der in der Luft enthaltene Sauerstoff teilweise ionisiert wird. Im Folgenden wird daher auch von ionisiertem Sauerstoff gesprochen.

Das erfindungsgemäße Verfahren zur Behandlung von Wasser in Aufbereitungsanlage betrifft insbesondere die Behandlung des Schlammes in der biologischen Abwasseraufbereitung von Industrie oder Haushaltsabwässern. Das erfindungsgemäße Verfahren kann in konventionellen Kläranlagen, sowie in biologischen Filtern, Festbett-Anlagen, Membranbiologien und andere biologische Aufbereitungsanlagen angewendet werden. Insbesondere betrifft die Erfindung ein Verfahren zur Behandlung von Wasser in einer Aufbereitungsanlage, in dem ein im Wasser vorhandenes biologisch abbaubares Material von Mikroorganismen biologisch abgebaut oder zumindest teilweise biologisch abgebaut wird.

Das erfindungsgemäße Verfahren zeichnet sich unter anderem dadurch aus, dass ein Teil der Stoffe a.) des biologisch abbaubaren Materials b.) der Mikroorganismen mit ionisierter Gas/Sauerstoff behandelt wird. Laut Stand der Technik sind bekannte Nachteile der biologisch arbeitenden Anlagen erwiesen. Durch das erfindungsgemäße Verfahren kann ein verbessertes biologisches Aufbereitungsergebnis, insbesondere im Hinblick auf sonst schwer abbaubare Bakterien erreicht werden. Die erfindungsgemäße Aufbereitungsanlage, bzw., das Verfahren erlauben den Abbau von biologischem Material und insbesondere auch gezielt den Abbau von fädigen Bakterien, wobei letztere für die Bildung von Blähschlamm verantwortlich gemacht werden. Die Einbringung des ionisierten Gases, (insbesondere ionisierte Luft, ionisierter Sauerstoff oder andere durch Ionisation erzeugte Gase) erfolgt vorteilhaft direkt in ein bestehendes Belüftungssystem einer biologischen Aufbereitungsanlage (Belebungsbecken). Diese Einbringung kann zusätzlich oder alternativ auch in den Rücklaufschlamm, Nachklär- oder in das Vorklärbecken erfolgen. Zudem kann diese Einbringung kontinuierlich oder diskontinuierlich erfolgen. Die Einbringung des ionisierten Gases erfolgt vorzugsweise mit dem bestehenden Belüftungssystem, meist Keramik- Glas- oder Polymerfritten, kann jedoch auch anderweitig, wie z.B. über Lanzensysteme, Mehrphasenpumpen, Venturi-Düsen oder andere Lufteinbringungssysteme erfolgen. Durch die Zuführung von ionisiertem Gas zum biologisch abbaubaren Material wird insbesondere eine Schädigung von sogenannten Fadenbakterien, wie bspw. *Microthrix Parvicella, Nocardioforme actinomiceten* und *Thiothrix-021N* erreicht, die zu einer deutlichen Reduktion der sogenannten Fädigkeit führen.

Weiterhin kann durch die Zudosierung von ionisiertem Gas erreicht werden, dass sich der Schlammvolumenindex (SVI) deutlich verringert. Dadurch ist auch eine Erhöhung der Entwässerbarkeit durch sphärische Änderung der Flockenstruktur möglich.

Das von den Erfindern entwickelte und erprobte Verfahren macht es möglich, mit Hilfe von ionisierter Luft, zuverlässig und kostengünstig Schaum, Bläh- oder Schwimmschlamm zu vermeiden bzw. zu reduzieren. Dabei werden insbesondere die für dieses Problem hauptverantwortlichen fadenförmigen Bakterien (meist *Microthrix parvicella*) selektiv gestresst und/oder geschädigt, wodurch eine Blähschlammbildung reduziert bzw. verhindert wird.

Bei einer 5-monatigen Testphase im halbtechnischen Maßstab konnten die Erfinder neben einer erfolgreichen Reduktion von fadenförmigen Bakterien folgende Vorteile mit dem erfindungsgemäßen Verfahren feststellen:
- Deutlich besseres Absetzverhalten sowie ein höherer Entwässerungsgrad (Schlammindex Erniedrigung von 145 ml/g auf 75 ml/g),
- Teilaufschluss der vorhandenen Mikroorganismen (weniger Schlammanfall),
- Das Sedimentationsverhalten des Schlammes im Nachklärbecken kann stark verbessert werden.
- Geruchsverminderung.
- Verbesserter Abbau durch positive Veränderung des BSB5/CSB- Verhältnisses.
- Verbesserte Reduktion von Phosphor (insbesondere Phosphonate). Dadurch kann der Einsatz von Flockungsmittel reduziert werden.

Insbesondere ist der oben genannte Biochemische Sauerstoffbedarf die Menge an Sauerstoff in mg/l, den Bakterien und alle anderen im Wasser vorhandene Mikroorganismen bei einer Temperatur von 20 °C innerhalb von fünf Tagen verbrauchen, woraus die Menge der dabei abgebauten organischen Stoffe bestimmt werden kann.

Einige Vorteile des erfindungsgemäßen Verfahrens bzw. der erfindungsgemäßen Vorrichtung lassen sich stichpunktartig wie folgt zusammenfassen: i) günstiges Verfahren in Anschaffung und Betrieb; ii) universell Einsetzbar; iii) Vor- bzw. Nachbehandlung und kombiniertes Verfahren ist möglich; iv) stabil im Betrieb; v) leicht in bestehenden Klärwerken nachrüstbar; vi) besonders Energie- und Reaktionseffizient.

Die Vorteile des erfindungsgemäßen Verfahrens im Vergleich zu herkömmlichen Lösungen sind zudem die stark reduzierten Betriebskosten und eine wesentliche Reduzierung von chemischen Zusatzstoffen bei erhöhter Effektivität und Stabilität im Betrieb. Des Weiteren entspricht das erfindungsgemäße Verfahren nicht nur den gängigen Verordnungen und Gesetzen im Umweltschutz, sondern revolutioniert die Möglichkeiten der Durchsetzung von erklärten Zielen der Europäischen Union bezügliche der EU-Wasserrahmenrichtlinie.

Die von den Erfindern nachgewiesene Möglichkeit, die Anzahl der eingebrachten Luftionen in das zu reinigende Abwasser und somit das Milieu zu verändern, eröffnet insbesondere neue Chancen in der Bekämpfung von fadenförmigen Bakterien. So kann das Milieu im Abwasserstrom so verändert werden, dass die darin enthaltenen, relativ ungeschützten fadenförmigen Bakterien, einer hohen Stresssituation ausgesetzt sind und abgetötet werden. Erwünschte Mikroorganismen sind durch vorhandene Schlammflocken relativ gut geschützt und werden durch die gezielte Einbringung dieses ionisierten Gases nur geringfügig gestresst und nicht geschädigt. Messungen haben gezeigt, dass fädige Bakterien eine negative Oberflächenladung besitzen und hydrophob sind. Dadurch lagern sich speziell positiv geladene Ionen an die Oberfläche dieser Bakterien im wässrigen Medium an. Aufgrund von einer Anreicherung von Ladungen auf den Bakterien wird eine Elektroporation (keine Oxidation) der Zellmembran erreicht und das fadenförmige Bakterium durch einen elektrostatischen Bruch zerstört. Dieser physikalische (nicht oxidative) Effekt bewirkt auch,

dass nicht nur fadenförmige Bakterien, sondern auch die Schlammflocken selbst in feine, disperse Mikro-Partikel aufgebrochen werden. Die dadurch ermöglichte Desintegration der Flocken und Solubilisation ist am Beginn der Begasung des wässrigen Mediums, durch einen Anstieg des gelösten CSB gekennzeichnet.

Erfindungsgemäße Ausführungsformen sind in den unabhängigen Ansprüchen definiert. Weitere bevorzugte erfindungsgemäße Ausführungen sind zudem in den abhängigen Ansprüchen definiert.

Gemäß einer beschriebenen Ausführungsform bzw. bei der Anwendung des beschriebenen Verfahrens liegt die Ionenkonzentration von positiven Ionen bei ca. höchstens 10¹⁰ Ionen pro m³ Luft (Gas). Erfindungsgemäß liegt der Anteil von Ionen zumindest bei zwischen 1*10³bis 1*10¹⁰ positiven Ionen pro m³ Gas.

Vorzugsweise liegt die Ionenkonzentration zwischen 1*10³ bis 1*10⁵ Ionen pro Gramm Trockensubstanz pro Stunde des biologisch abbaubaren Materials. Weiterhin bevorzugt sind Dosen von 1*10⁵ bis 1*10⁹ Ionen pro Gramm Trockensubstanz pro Stunde des biologisch abbaubaren Materials und der Mikroorganismen. Besonders bevorzugt sind Dosen von weniger als 1*10³ Ionen pro Gramm Trockensubstanz pro Stunde des biologisch abbaubaren Materials und der Mikroorganismen bei einer kontinuierlichen Begasung des biologisch abbaubaren Materials und der Mikroorganismen. Unter Normalbedingungen liegen die SVI - Werte (Schlammvolumenindex) in kommunalen Abwasserreinigungsanlagen zwischen 70 und 150 ml/g. Je geringer der Wert für SVI ist, umso besser ist die Absetzbarkeit des Belebtschlamms. Bevorzugterweise wird der Ionisationsgrad der Luft so gewählt, dass ein SVI - Wert von 60 ml/g nicht unterschritten wird.

Im Rahmen der vorliegenden Erfindung wurde festgestellt, dass bei einer Behandlung von Wässern mit ionisiertem Gas, unter den beschriebenen Bedingungen, eine Agglomeration verringert wird bzw. keine Agglomeration (auch als Aggregation oder Koagulation bekannt) stattfindet. Mikroskopische Aufnahmen zeigen nach einer Einbringung des ionisierten Gases, unter den beschriebenen Bedingungen, einen Aufbruch der Schlammflocke in fein, disperse Mikro-Partikel. Eine solche Agglomeration bzw. Koagulation, die erfindungsgemäß vermieden wird, ist beispielsweise in WO 2011/064353 A1 beschrieben. Diese Agglomeration bewirkt, dass sich die aneinander gelagerten Mikroorganismen, Biomoleküle bzw. Verunreinigungen aufgrund des Stoke'schen Gesetzes im Schwerefeld langsamer absetzen und somit langsamer bzw. schlechter sedimentieren.

Im Gegensatz dazu beruht das erfindungsgemäße Verfahren nicht auf Agglomeration bzw. Koagulation. Es wird bei dem erfindungsgemäßem Verfahren gezielt eine Behandlung mit ionisiertem Gas so gewählt, dass keine Agglomeration, sondern eine Elektroporation erfolgt.

Das erfindungsgemäße Verfahren zeichnet sich dadurch aus, dass CSB-Wert zu Beginn einer Behandlung des Mediums mit dem ionisierten Gas ansteigt, insbesondere um mindestens 2%.

In EP 1 349 811 wird eine Oxidation und Abbau von Verunreinigungen aus Wasser beschrieben. Im Gegensatz dazu beruht das erfindungsgemäße Verfahren nicht auf Oxidation. Es wird gezielt eine Behandlung mit ionisierter Luft so gewählt, dass keine Aufoxidation und kein oxidativer Abbau der partikulären und/oder gelösten Stoffe erfolgt.

Bei diesem einfachen und effektiven erfindungsgemäßen Verfahren, werden im Gegensatz zu herkömmlichen Verfahren, keine chemischen Zusatzstoffe wie zum Beispiel Aluminiumsalze oder Chlor benötigt, da es mit einer kostengünstigen Herstellung von ionisiertem Gas auskommt. Dies führt zu einer erheblichen Reduzierung von Betriebskosten, gerade durch den minimalen Energieverbrauch.

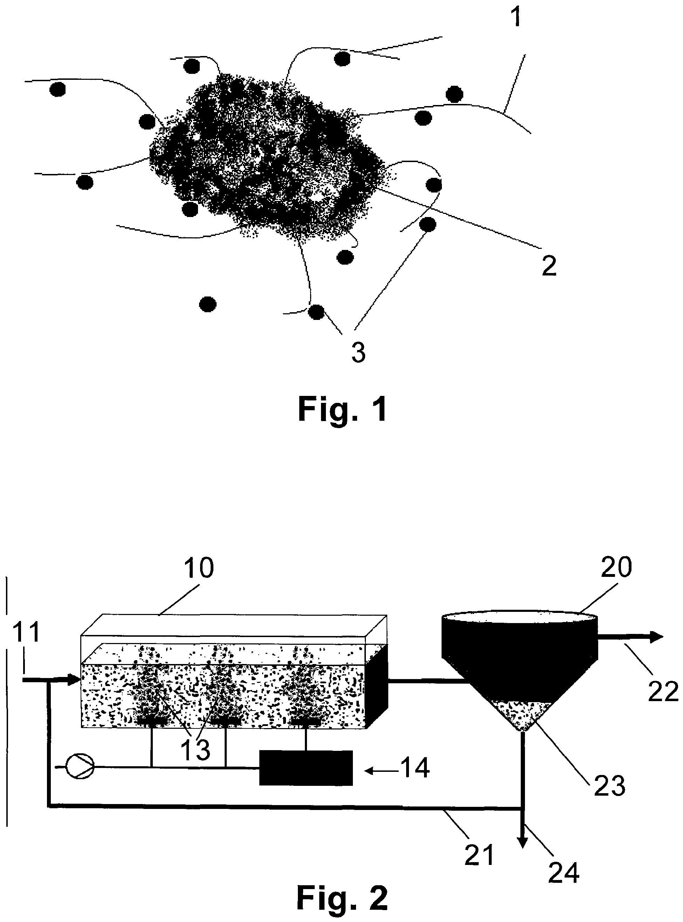

Die Idee hinter der Bekämpfung von fadenförmigen Bakterien, wie *Microthrix Parvicella,* besteht darin, dass sich diese nur begrenzt in der Schlammflocke befinden (siehe Figur 1). Die Filamente dieser fadenförmigen Bakterien sind üblicherweise frei in der wässrigen Phase vorhanden oder ragen aus der Schlammflocke heraus. Da diese fadenbildenden Bakterien desweiteren sehr hydrophob sind, werden sie durch kleine Luftbläschen an die Oberfläche flotiert und verursachen den so genannten Bläh- oder Schwimmschlamm.

Um den Effekt von ionisierter Luft auf das Fadenbakterium *Microthrix parvicella* zu überprüfen, wurden Versuchsreihen in einer halbtechnischen Anlage, direkt in einer Kläranlage gestartet. Hier wurde bereits mit realen Schlämmen, direkt aus der Kläranlage gearbeitet. Dabei wurde die Luft zur Sauerstoffversorgung der Mikroorganismen ionisiert. Bei diesen Versuchsreihen wurde Belebtschlamm mit ionisierter Luft behandelt. Desweiteren wurde täglich der Fädigkeitsindex bestimmt. Der Fädigkeitsindex umfasst 7 Stufen, wobei in Stufe 0 keine Fäden und bei Stufe 6 übermäßig viele Fäden bestimmt werden. Durch die Anwendung von ionisierter Luft konnte im Versuchszeitraum der Fädigkeitsindex in der Versuchsanlage signifikant verringert werden. Der Schaum im Belebungsgefäß wurde durch die Behandlung gänzlich entfernt und die Absetzeigenschaften des Belebtschlamms konnten im Verlauf des Versuchs gravierend verbessert werden. Die Funktionalität der Kläranlage war zu jedem Zeitpunkt des Versuchs gewährleistet und wurde durch die Ionisation nicht negativ beeinflusst.

Vor der Anwendung von ionisierter Luft befand sich ein hoher Anteil an Fadenbakterien (*Microthrix parvicella*) im Belebtschlamm. Die Bestimmung des Fädigkeitsindex ergab einen Wert von 6, zudem kam es zu massiver Schaumbildung auf dem Belebungsgefäß. Innerhalb von vier Tagen konnte durch den Einsatz von ionisierter Luft eine massive Verbesserung des Fädigkeitsindex erzielt werden.

Innerhalb des gesamten Versuchszeitraums konnte so *Microthrix parvicella* signifikant reduziert werden und der Fädigkeitsindex wurde von Stufe 6 auf Stufe 2 verbessert. Außerdem verbesserte sich das Gesamtbild des Belebungsgefäßes auch sehr schnell und konnte im gesamten Zeitraum frei von Schaum gehalten werden.

Die Erfindung umfasst ebenfalls einzelne Merkmale in den Figuren, auch wenn sie dort im Zusammenhang mit anderen Merkmalen gezeigt sind und/oder vorstehend oder nachfolgend nicht genannt sind.

Die Erfindung umfasst ebenfalls Ausführungsformen mit jeglicher Kombination von Merkmalen, die vorstehend oder nachfolgend zu verschiedenen Ausführungsformen bzw. Aspekten genannt oder gezeigt sind.

Gemäß einem ersten Aspekt betrifft die Erfindung ein Verfahren zur Behandlung von Wasser in einer Aufbereitungsanlage mit den Schritten: Einleiten von zu behandelndem Wasser, in dem biologisch abbaubares Material von Mikroorganismen vorhanden sind, in ein Belebungsbecken, das Teil der Aufbereitungsanlage ist; Einleiten von Gas in das Belebungsbecken zur Behandlung des Wassers; und Ausleiten des behandelten Wassers aus dem Reaktionsraum.

Insbesondere ist das erfindungsgemäße Verfahren dadurch gekennzeichnet, dass das eingeleitete Gas zumindest teilweise ionisiert ist. Vorzugsweise wird eine gezielte Behandlung mit ionisiertem Gas so gewählt, dass keine Agglomeration, sondern eine Elektroporation erfolgt. Zudem wird die Ionisation des erfindungsgemäßem Verfahren so gewählt, dass keine kein zusätzliches Ozon entsteht. Die erfindungsgemäße Elektroporation hat den bevorzugten Vorteil, dass die Fädigkeit gezielt reduziert werden kann und eine Separation in einem nachgeschalteten Nachklärbecken/Trennraum bzw. im Schwerefeld durchgeführt werden kann. Entsprechend kann auf zusätzliche Membrane verzichtet werden. Vorzugsweise liegt der Anteil von Ionen bei höchstens 1*10¹⁰ pro m³ Gas. Vorzugsweise liegt der Anteil von Ionen (vorzugsweise bei Dauerbetrieb) bei höchstens 1*10⁹ Ionen pro Gramm Trockensubstanz pro Stunde des biologisch abbaubaren Materials und der Mikroorganismen, weiters bevorzugt bei höchstens 1*10⁵ Ionen pro Gramm Trockensubstanz pro Stunde, und am meisten bevorzugt bei weniger als 1*10³ Ionen pro Gramm Trockensubstanz pro Stunde der Luftzuführung zur Sauerstoffversorgung der Mikroorganismen.

Vorzugsweise liegt der Gehalt an ionisierten Sauerstoffspezien nach dem Ionisieren im Vergleich zur Gesamtsauerstoffmenge bei weniger als 0,2%, weiter bevorzugt bei weniger als 0,1%. Aufgrund des geringen Ionisationsgrades arbeitet das erfindungsgemäße Verfahren sehr energiesparsam, wobei vorzugsweise ein Energieeintrag zur Ionisation von weniger als 0,8 Watt pro Liter Wasser benötigt wird.

Gemäß einer bevorzugten Ausführungsform wird das zumindest teilweise ionisierte Gas durch Ionisation von Luft hergestellt das vorzugsweise ionisierten Sauerstoff enthält. Vorzugsweise werden die positiv geladene Sauerstoffionen nicht durch Coronaentladung erzeugt, sondern vorzugsweise durch elektrostatischer Entladung.

Coronaentladung ist eine Gasentladung an der Oberfläche eines unter Hochspannung stehenden Teils einer elektrischen Anlage, an der die Durchbruchsfeldstärke der Luft überschritten wird. In der vorliegenden Erfindung erfolgt die verbesserte Reinigungswirkung nicht mit Ozon, sondern mit ionisiertem Gas, insbesondere positiv geladene Sauerstoffionen. Der klare Vorteil ist dabei zu sehen, dass keine Coroaentladung erfolgt, sondern eine Ionisierung mittels elektrostatischer Entladung. Elektrostatische Entladung ist ein Übergang von Ladungen zwischen Körpern mit verschiedenen elektrostatischen Potentialen, verursacht durch direkten Kontakt durch ein elektrostatisches Feld. Dabei wird die Durchbruchsfeldstärke der Luft nicht überschritten. Die positiven Ionen entstehen vorzugsweise durch direkte Ionisation O₂+e⁻ →- O₂⁺ + 2e⁻ bzw. durch dissoziative Ionisation O₂+e⁻ → O⁺ + O⁰ + 2e⁻, welche im wässrigen Milieu praktisch nicht über diese oder ähnliche Mechanismen reagiert, sondern durch einen elektrostatischen Bruch auf den Bakterienzellen reagierten und somit die filamentösen Mikroorganismen selektiv abtöten.

Die Erzeugung von ionisierter Luft, vorzugsweise ohne Ozon, erfolgt deshalb vorzugsweise mit speziellen Transformatoren, die als Ausgangsspannung auf eine Ionisationsröhre vorzugsweise max. 3.000 Volt abgeben. Vorzugsweise liegt der Ozongehalt unter 0,05 ppm, weiter bevorzugst unter 0,005 ppm. Weiter bevorzugt wird kein Ozon erzeugt.

Bei der Erzeugung von aktiven Sauerstoffionen sind die Ionisierungsbedingungen vorzugsweise so zu wählen, dass Ozon vermieden wird. Besonders bevorzugt wird deshalb erfindungsgemäß ein Ozon-Sensor verwendet, welcher ein Signal gibt, wenn Ozon während der Ionisation entsteht. Falls die Entstehung von Ozon signalisiert wird, kann das Verfahren beispielsweise durch kurzfristige Abschaltung oder Verringerung der Ionisationsspannung derart gesteuert werden, dass kein Ozon mehr gebildet wird.

Erfindungsgemäß wird deshalb die Ionisierung der Luft so durchgeführt, dass bei einer Signalgebung des Ozon-Sensor die Ionisationsspannung kurzfristig heruntergefahren bzw. abgeschalten wird. Dies hat zur Folge, dass sich Partikel, die sich an der Ionisationtsröhre durch statische Kräfte (Spannung) festgesetzt haben, wieder lösen und somit ein Spannungsüberschlag (Ozonbildung) vermieden wird. Weiters kann durch die Wahl der Spannungsversorgung des Ionisators eine Bildung von Ozon vermieden werden. Bevorzugt wird der Ionisator in einem Bereich von weniger als 3 kV und mindestens 1kV betrieben, um die Erzeugung von Ozon zu vermeiden.

Die Begasungsdauer mit dem ionisierten Gas im Belebungsbecken liegt vorzugsweise bei mindestens 5 Minuten, insbesondere mindestens 10 Minuten, vorzugsweise mindestens 15 Minuten, am meisten bevorzugt während der gesamten Aufenthaltsdauer des Wassers im Belebungsbecken.

Erfindungsgemäß wird das durch das ionisierte Gas behandelte Wasser aus dem Belebungsbecken in ein nachgeschaltetes Nachklärbecken/Trennraum (20) eingeleitet, in dem eine Trennung durch Sedimentation, vorzugweise ohne zusätzliche Siebe oder Membranen, erfolgt. Zudem kann optional über eine Rückführleitung ein Rückstrom des sedimentierten biologisch abbaubaren Material vom Trennraum in das Belebungsbecken fließen.

Zusätzlich oder alternativ kann eine Behandlung mit ionisierter Luft in diesem Rückstrom erfolgen.

Vorzugsweise beträgt das Fassungsvermögen des Belebungsbeckens mindestens 1.000 m³, vorzugsweise mindestens 6.000 m³. Weiter bevorzugt wird dem Belebungsbecken ein Volumenstrom von aufzubereitenden Wasser in der Größe zugeführt, dass das Wasser im Belebungsbecken innerhalb von 2 bis 6 Tagen, insbesondere innerhalb von 3 bis 5 Tagen ausgetauscht wird.

Bevorzugt beträgt im Belebungsbecken der Anteil von organischer Trockensubstanz im Wasser 3 bis 5 g/l.

Die vorliegende Erfindung betrifft neben dem Verfahren auch eine entsprechende Vorrichtung zur Durchführung des erfindungsgemäßen Verfahrens. So betrifft die Erfindung auch eine Aufbereitungsanlage zur Aufbereitung von Wasser, insbesondere eine Kläranlage für Abwasser mit: einem Belebungsbecken zum biologischen Abbau von biologisch abbaubarem Material durch Mikroorganismen; und einer Belüftungseinrichtung zum Einleiten von Gas in das Belebungsbecken. Insbesondere ist die erfindungemäße Aufbereitungsanlage dadurch gekennzeichnet, dass die Belüftungseinrichtung eine Ionisationseinrichtung umfasst, zum zumindest teilweisen Ionisieren des einzuleitenden Gases. Das ionisierte Gas enthält höchstens 1*10¹⁰ Ionen pro m³.

Aufgrund der erfindungsgemäßen Elektroporation, kann eine Abtrennung in einem dem Belebungsbecken nachgeschalteten Nachklärbecken/Trennraum erfolgen, d.h., in dem Nachklärbecken/Trennraum findet zumindest eine teilweise Trennen des biologisch abbaubaren Materials und der Mikroorganismen vom Wasser statt.

Vorzugsweise ist das Belebungsbecken mit dem Trennraum durch eine Leitung zum Überführen von behandeltem Wasser vom Belebungsbecken in den Trennraum verbunden, wobei der Trennraum vorzugsweise zusätzlich eine Rückleitung aufweist. Mittels dieser Rückleitung kann optional biologisch abbaubares Material vom Tennraum in das Belebungsbecken zurückgeführt werden.

### KURZE BESCHREIBUNG DER ZEICHNUNGEN

Im Folgenden werden bevorzugte Ausführungsformen der vorliegenden Erfindung unter Bezugnahme auf die Figuren ausführlich beschrieben. Es zeigen:
- Fig. 1: eine Schlammflocke mit Fadenbakterien;
- Fig. 2: ein erfindungsgemäßes Verfahrensschema, insbesondere zur Bekämpfung von fadenförmigen Bakterien.

### DETAILLIERTE BESCHREIBUNG BEVORZUGTER AUSFÜHRUNGSFORMEN

In Figur 1 ist schematisch eine Schlammflocke 2 dargestellt mit fadenförmigen Bakterien 1. Bei dem erfindungsgemäßen Verfahren bzw. System wird zumindest ein Teil des biologisch abbaubaren Materials behandelt. Bevorzugt behandelt wird biologisches Material, welches sich außerhalb oder zum Teil außerhalb der Schlammflocke 2 befindet. Das kann insbesondere dadurch erreicht werden, dass aufgrund des oben beschriebenen geringen Energieeintrags zur Ionisation der Luft nur diese Stoffe mit der ionisierten Luft 3 behandelt werden. Diese Stoffe sind unter Anderem fadenförmige Bakterien 1 (insbesondere *Microthrix Parvicella, Nocardioforme actinomiceten* und *Thiothrix-021N*) und gelöste und nicht gelöste organische Spurenstoffe (Hormone, Pestizide,...).

Die Schädigung der fadenförmigen Bakterien 1 (Fadenbakterien) führt zu einer deutlichen Verringerung der sogenannten Fädigkeit. Unter dem Begriff "Fädigkeit" wird insbesondere ein Maß für die Menge und Länge der Fadenbakterien pro Volumeneinheit verstanden. Weiterhin wird durch die Zudosierung von ionisierter Luft in der erfindungsgemäßen Menge erreicht, dass sich der Schlammvolumenindex (SVI) deutlich verringert. Unter dem Begriff "Schlammvolumenindex" wird insbesondere ein Maß für die Sedimentationsfähigkeit (Absetzbarkeit) des Belebtschlamms, also des biologisch abbaubaren Materials und der Mikroorganismen verstanden.

Figur 2 zeigt einen Teil einer Aufbereitungsanlage zur Durchführung des erfindungsgemäßen Verfahrens, insbesondere zur Aufbereitung von Abwasser in einer Kläranlage, mit einem Reaktionsraum/Belebungsbecken 10, in dem ein in dem Wasser vorhandenes biologisch abbaubares Material von Mikroorganismen zumindest teilweise biologisch abgebaut wird und einem Trennraum 20, in dem das biologisch abbaubare Material und die Mikroorganismen zumindest teilweise vom Wasser getrennt werden.

Der Reaktionsraum 10 dient dazu, dass das in dem Wasser vorhandene biologisch abbaubare Material durch Mikroorganismen abgebaut wird. Dabei ernähren sich die Mikroorganismen von dem biologisch abbaubaren Material, vermehren sich und zerlegen bzw. oxidieren dabei Kohlenwasserstoffverbindungen des Materials bei einer Abgabe von Kohlendioxid, Wasser und Stickstoff.

Erfindungsgemäß kann es sich bei der Aufbereitungsanlage um eine kontinuierlich durchflossene Anlage, mit einem Vorklärbecken (nicht dargestellt) und einem nachgeschalteten Nachklärbecken 20 (nachfolgend auch Trennraum 10 genannt). In einer kontinuierlichen Anlage wird das zu reinigende Abwasser über den Zulauf 11 in den Reaktionsraum 10 (nachfolgend auch Belebungsbecken 10 genannt) eingeführt. Das Belebungsbecken ist mit einer Belüftungseinrichtung ausgestattet mit der vorzugsweise Luft bzw. Sauerstoff in das Belebungsbecken eingebracht wird. Die Belüftung erfolgt vorzugsweise durch ein Druckbelüftungssystem. Die Steuerung der Belüftung kann durch Sauerstoffsonden oder komplexe Regelmechanismen unter Berücksichtigung der Nitrifikation/Denitrifikation (Zeit-Pausensteuerung, Redox-Potential, ON-LINE Messung von Ammonium und Nitrat) sowie der stichprobenartigen Messung der Ionenkonzentration des zugeführten Gases erfolgen.

Der dem Reaktionsraum 10 zugeführte Volumenstrom des aufzubereitenden Wassers wird in seiner Größe vorzugsweise so bemessen, dass das Wasser im Reaktionsraum vorzugsweise innerhalb von 2 bis 6 Tagen, insbesondere innerhalb von 3 bis 5 Tagen ausgetauscht wird. Übliche Fassungsmengen des Reaktionsraums 10 liegen bei mindestens 1.000 m³, vorzugsweise mindestens 3.000 m³, insbesondere mindestens 5.000 m³, vorzugsweise mindestens 6.000 m³ und weiter vorzugsweise bei mindestens 7.000 m³.

Das erfindungsgemäße Verfahren ist insbesondere dadurch gekennzeichnet, dass zumindest zeitweise Wasser aus dem Reaktionsraum 10 in den nachgeschalteten Trennraum 20 überführt wird und in diesem das biologisch abbaubare Material und die Mikroorganismen zumindest teilweise von Wasser getrennt werden. Über eine optionale Rückführung 21 kann ein Teil aus dem Trennraum 20 in Form eines Rückstroms mit biologisch abbaubaren Material und zumindest einem Teil der Mikroorganismen in den Reaktionsraum 10 zurückgeführt werden. Dieses Material und die abgestorbenen Mikroorganismen dienen als Nahrung für die im Reaktionsraum 10 lebenden Mikroorganismen.

Das erfindungsgemäße Verfahren ist vorzugsweise dadurch gekennzeichnet, dass im Reaktionsbecken der Anteil von organischer Trockensubstanz im Wasser 3 bis 5 g/l beträgt. Der dem Reaktionsraum 10 nachgeschaltete Trennraum 20 dient dazu, das Wasser vom organisch abbaubaren Material sowie von den Mikroorganismen zu trennen. Diese Trennung erfolgt beispielsweise durch einfaches Absetzen. Der Trennraum 20 (oft auch das Nachklärbecken 20 bezeichnet) basiert im Wesentlichen auf einer gravitativen Separation, wobei der im Wasser enthaltende Schlamm sich absetzt und im unteren Bereich gesammelt und vorzugsweise eingedickt wird.

Insbesondere ist der Trennraum 20 dadurch gekennzeichnet, dass ein Wasserstrom mit Mikroorganismen und biologisch abbaubaren Material aus dem Reaktionsraum 10 zum Trennraum fließt und dass vorzugsweise zumindest ein Teil als Rückstrom mit biologisch abbaubaren Material und einem Teil der Mikroorganismen aus dem Trennraum 20 zum Reaktionsraum 10 zurück fließt. Erfindungsgemäß kann dieser Rückstrom und/oder der Reaktionsraum 10, bevorzugt aber nur der Reaktionsraum 10 einer Behandlung mit ionisierter Luft unterzogen wird, deren Intensität erfindungsgemäß vorgegeben wird. Mit anderen Worten, der Schlamm aus der Eindickzone 23 wird abgezogen und gelangt als Rücklaufschlamm zurück über die Leitung 21 in das Belebungsbecken 11 oder als Überschussschlamm in die Schlammbehandlung 24.

Gemäß Figur 2 wird ein Teil der Luft zur Belüftung des Belebungsbeckens/Reaktionsraum 10 ionisiert. In der Figur 2 ist ein klare Vorteil des erfindungsgemäßen Verfahrens erkennbar, da die erfindungsgemäße Technologie bevorzugt direkt in die bestehende Belüftung ohne große Umbauten integriert werden kann.

Erfindungsgemäß wird nur ein Teil der in das Belebungsbecken zur Behandlung eingeführten Luft ionisiert. Gemäß einer bevorzugten Ausführungsform liegt die erfindungsgemäße geringe Dosis bei weniger als 0,2% von ionisierten Sauerstoffspezies im Vergleich zur Gesamtsauerstoffmenge, welche zur Sauerstoffversorgung den Mikroorganismen zudosiert werden. Dies entspricht bevorzugt eine Menge von weniger als 1*10⁹ Ionen pro Gramm Trockensubstanz pro Stunde des biologisch abbaubaren Materials und der Mikroorganismen im Belebungsbecken. Die sehr geringe Dosis von weniger als 1*10⁹ Ionen pro Gramm Trockenmasse des biologisch abbaubaren Materials und der Mikroorganismen hat sich überraschenderweise als ausreichend erwiesen, um die Fädigkeit und den Schlammvolumenindex zu reduzieren. Insbesondere kann eine Reduktion des Schlammvolumenindex um mindestens 20%, insbesondere von mindestens 40% oder sogar mindestens 60% erreicht werden. Alternativ zu dieser Dosis hat sich auch eine Dosis von 1*10³ bis 1*10⁵ Ionen pro Gramm Trockensubstanz pro Stunde des biologisch abbaubaren Materials und der Mikroorganismen als vorteilhaft erwiesen. Auch diese Dosis lässt sich mit den beschriebenen Verfahren und Vorrichtungsmerkmalen unabhängig von der oben bezeichneten niedrigeren Dosis vorteilhaft einsetzen. Weiterhin bevorzugt sind Dosen von 1*10⁵ bis 1*10⁹ Ionen pro Gramm Trockensubstanz pro Stunde des biologisch abbaubaren Materials und der Mikroorganismen. Besonders bevorzugt sind Dosen von weniger als 1*10³ Ionen pro Gramm Trockensubstanz pro Stunde des biologisch abbaubaren Materials und der Mikroorganismen bei einer kontinuierlichen Begasung des biologisch abbaubaren Materials und der Mikroorganismen.

Gemäß der Erfindung wird die ionisierte Luft bevorzugt direkt in das Belebungsbecken, insbesondere in ein bestehendes Belüftungssystem zur Sauerstoffversorgung dosiert. Dies kann zeitlich intermittierend, d.h. nur zu bestimmten Zeitpunkten für bestimmte Dauer oder bevorzugt dauerhaft erfolgen.

Alternativ oder zusätzlich kann der Rückstrom 21 mit ionisierter Luft behandelt werden. Dies hat den Vorteil, dass aufgrund des höheren Trockensubstanzanteiles eine schnellere Reaktion mit dem biologisch abbaubaren Material stattfindet. Überraschenderweise hat sich gezeigt, dass auch schon eine kurze Behandlungszeit von 0,5 bis 30 Minuten mit ionisierter Luft zu einer signifikanten Schädigung der entsprechenden Bakterien führt und damit zu einer deutlichen Erhöhung der biologischen Abbaubarkeit dieser Bakterien kommt.

Vorzugsweise erfolgt die Regelung der Leistung der Belüftung bei Druckluftbelüftung vorzugsweise durch Ein- und Ausschalten bzw. Drehzahlregelung der Gebläse/Kompressoren.

Gemäß einer weiteren vorteilhaften Ausgestaltung des erfindungsgemäßen Verfahrens werden 1 Vol.% bis 30 Vol.-% des biologisch abbaubaren Materials und der Mikroorganismen mit ionisiertem Gas behandelt. Insbesondere wird zumindest ein Teil des einzubringenden Gases mittels Ionisationseinheit 14 in dem Grade ionisiert wie oben beschrieben. Dies kann insbesondere dadurch erreicht werden, dass nur ein Teil der Luftzuführung zur Sauerstoffversorgung der Mikroorganismen ionisiert wird und dem Belebungsbecken zugeführt wird. Besonders bevorzugt ist eine Ionisation der Luft im dritten Drittel der Luftzuführung im Belebungsbecken, was dem letzten Drittel vor einer Trennung des Schlammes (Schlammflocken) entspricht.

## Patentansprüche

1. Verfahren zur Behandlung von Wasser in einer Aufbereitungsanlage mit den Schritten:
Einleiten (11) von zu behandelndem Wasser, in dem biologisch abbaubares Material, das von Mikroorganismen zumindest teilweise biologisch abbaubar ist, vorhanden ist, in ein Belebungsbecken (10), das Teil der Aufbereitungsanlage ist;
Einleiten von Gas (13) direkt in das Belebungsbecken (10) zur Behandlung des Wassers; und
Ausleiten (12) des behandelten Wassers aus dem Reaktionsraum (10);
wobei das eingeleitete Gas zumindest teilweise ionisiert ist und
i) der Anteil von Ionen bei mindestens 1*10³ Ionen und bei höchstens 1*10¹⁰ Ionen pro m³ Gas liegt, und
ii) der Anteil von Ionen bei mindestens 1*10³ bis 1*10⁹ Ionen pro Gramm Trockensubstanz pro Stunde des biologisch abbaubaren Materials liegt, und dieses Gas nicht Ozon ist.

2. Verfahren nach Anspruch 1, wobei das zumindest teilweise ionisierte Gas (13) durch Ionisation von Luft hergestellt wird und vorzugsweise ionisierten Sauerstoff enthält.

3. Verfahren nach einem der vorhergehenden Ansprüche, wobei der Gehalt an ionisierten Sauerstoffspezien nach dem Ionisieren im Vergleich zur Gesamtsauerstoffmenge bei weniger als 0,2% liegt, weiter bevorzugt weniger als 0,1%.

4. Verfahren nach einem der vorhergehenden Ansprüche, wobei ein Energieeintrag zur Ionisation von weniger als 0,8 Watt pro Liter Wasser benötigt wird.

5. Verfahren nach einem der vorhergehenden Ansprüche, wobei ein Anteil von Ionen, vorzugsweise bei Dauerbetrieb, bei höchstens 1*10⁹ Ionen pro Gramm Trockensubstanz pro Stunde des biologisch abbaubaren Materials und der Mikroorganismen liegt, weiters bevorzugt bei höchstens 1*10⁵ Ionen pro Gramm Trockensubstanz pro Stunde liegt, und am meisten bevorzugt weniger als 1*10³ Ionen pro Gramm Trockensubstanz pro Stunde der Luftzuführung zur Sauerstoffversorgung der Mikroorganismen zugeführt werden.

6. Verfahren nach einem der vorhergehenden Ansprüche, wobei der Ionisationsgrad der Luft so gewählt wird, dass ein Schlammvolumenindex (SVI) Wert von 60 ml/g nicht unterschritten wird.

7. Verfahren nach einem der vorhergehenden Ansprüche, wobei eine Begasungsdauer des ionisierten Gases im Belebungsbecken bei mindestens 5 Minuten, insbesondere mindestens 10 Minuten, vorzugsweise mindestens 15 Minuten liegt, und am meisten bevorzugt während der gesamten Aufenthaltsdauer des Wassers im Belebungsbecken (10) die Begasung erfolgt.

8. Verfahren nach einem der vorhergehenden Ansprüche, wobei das Ausleiten (12) des behandelten Wassers aus dem Belebungsbecken (10) in ein nachgeschaltetes Nachklärbecken/Trennraum (20) erfolgt, und wobei vorzugsweise über eine Rückführleitung (21) ein Rückstrom mit biologisch abbaubarem Material und zumindest einem Teil der Mikroorganismen aus dem Trennraum (20) in das Belebungsbecken (10) fließt.

9. Verfahren nach Anspruch 8, wobei ionisierte Luft in den Rückstrom (21) eingeleitet wird.

10. Verfahren nach einem der vorhergehenden Ansprüche, wobei das Fassungsvermögen des Belebungsbeckens (10) mindestens 1.000 m³, vorzugsweise mindestens 6.000 m³ beträgt und dem Belebungsbecken (10) vorzugsweise ein Volumenstrom von aufzubereitendem Wasser in der Größe zugeführt wird, dass das Wasser im Belebungsbecken (10) innerhalb von 2 bis 6 Tagen, insbesondere innerhalb von 3 bis 5 Tagen ausgetauscht wird.

11. Verfahren nach einem der vorhergehenden Ansprüche, wobei im Belebungsbecken (10) der Anteil von organischer Trockensubstanz im Wasser 3 bis 5 g/l beträgt.

12. Verfahren nach einem der vorhergehenden Ansprüche, wobei der Anteil von Ionen zumindest bei 1*10⁴ positiven Ionen pro m³ Gas und höchstens bei 1*10¹⁰ positiven Ionen pro m³ Gas liegt.

13. Aufbereitungsanlage zur Aufbereitung von Wasser mit:
einem Belebungsbecken (10) zum biologischen Abbau von biologisch abbaubarem Material durch Mikroorganismen; und
einer Belüftungseinrichtung zum Einleiten von Gas direkt in das Belebungsbecken (10),
wobei die Belüftungseinrichtung eine Ionisationseinrichtung umfasst, konzipiert zum zumindest teilweisen Ionisieren des einzuleitenden Gases, sodass
i) der Anteil an Ionen bei mindestens 1*10³ Ionen und höchstens 1*10¹⁰ Ionen pro m³ Gas liegt, und
ii) bei mindestens 1*10³ bis 1*10⁹ Ionen pro Gramm Trockensubstanz pro Stunde des biologisch abbaubaren Materials liegt, und dieses Gas nicht Ozon ist.

14. Aufbereitungsanlage nach Anspruch 13, wobei dem Belebungsbecken (10) ein Nachklärbecken/Trennraum (20) zum zumindest teilweisen Trennen des biologisch abbaubaren Materials und der Mikroorganismen vom Wasser (4) nachgeschaltet ist.

15. Aufbereitungsanlage nach einem der vorhergehenden Ansprüche 13 - 14, wobei das Belebungsbecken (10) mit dem Trennraum (20) durch eine Leitung (12) zum Überführen von behandeltem Wasser vom Belebungsbecken (10) in den Trennraum (20) verbunden ist, wobei der Trennraum (20) zusätzlich eine Rückleitung (21) aufweist, mit der biologisch abbaubares Material vom Tennraum (20) in das Belebungsbecken zurückgeführt werden kann.

## Claims

1. A process for treating water in a processing plant comprising the steps of:
introducing (11) water to be treated, which comprises biodegradable material that is at least partially biodegradable by microorganisms, into an aeration tank (10) which is part of the processing plant;
introducing gas (13) directly into the aeration tank (10) for treating the water; and
removing (12) the treated water from the reaction chamber (10);
wherein the introduced gas is at least partially ionized and
(i) the content of ions is at least 1*10³ ions and at most 1*10¹⁰ ions per m³ of gas, and
(ii) the content of ions is at least 1*10³ to 1*10⁹ ions per gram of dry substance per hour of the biodegradable material, and said gas is no ozone.

2. The process according to claim 1, wherein the at least partially ionized gas (13) is made by ionization of air and preferably comprises ionized oxygen.

3. The process according to any of the preceding claims, wherein the content of ionized oxygen species after ionization is less than 0.2%, more preferably less than 0.1% as compared to the total amount of oxygen.

4. The process according to any of the preceding claims, wherein an energy input for ionization of less than 0.8 Watt per liter of water is necessary.

5. The process according to any of the preceding claims, wherein a content of ions, preferably during continuous operation, is at most 1*10⁹ ions per gram of dry substance per hour of the biodegradable material and the microorganisms, more preferably at most 1*10⁵ ions per gram of dry substance per hour, and most preferably less than 1*10³ ions per gram of dry substance per hour of air supply are supplied for supplying the microorganisms with oxygen.

6. The process according to any of the preceding claims, wherein the degree of ionization of the air is selected such that a sludge volume index (SVI) value does not fall below 60 ml/g.

7. The process according to any of the preceding claims, wherein a gassing duration of the ionized gas in the aeration tank is at least 5 minutes, in particular at least 10 minutes, preferably at least 15 minutes, and most preferably gassing takes place during the entire time the water is in the aeration tank (10).

8. The process according to any of the preceding claims, wherein the treated water is removed (12) from the aeration tank (10) into a downstream secondary settling tank/separating chamber (20), and wherein preferably a return flow with biodegradable material and at least part of the microorganisms flows through a return conduit (21) from the separating chamber (20) into the aeration tank (10).

9. The process according to claim 8, wherein ionized air is introduced into the return flow (21).

10. The process according to any of the preceding claims, wherein the holding capacity of the aeration tank (10) is at least 1,000 m³, preferably at least 6,000 m³, and a volume flow of water to be treated is preferably supplied to the aeration tank (10) in such an amount that the water in the aeration tank (10) is exchanged within 2 to 6 days, in particular within 3 to 5 days.

11. The process according to any of the preceding claims, wherein in the aeration tank (10) the content of organic dry substance in the water is 3 to 5 g/l.

12. The process according to any of the preceding claims, wherein the content of ions is at least 1*10⁴ positive ions per m³ of gas and at most 1*10¹⁰ positive ions per m³ of gas.

13. A processing plant for processing water comprising:
an aeration tank (10) for biologically degrading biodegradable material by microorganisms; and
a ventilation means for introducing gas directly into the aeration tank (10),
wherein the ventilation means comprises an ionization means which is configured for at least partially ionizing the gas to be introduced, so that
(i) the content of ions is at least 1*10³ ions and at most 1*10¹⁰ ions per m³ of gas, and
(ii) at least 1*10³ to 1*10⁹ ions per gram of dry substance per hour of the biodegradable material, and said gas is no ozone.

14. The processing plant according to claim 13, wherein a secondary settling tank/separating chamber (20) for at least partially separating the biodegradable material and the microorganisms from the water (4) is arranged downstream of the aeration tank (10).

15. The processing plant according to any of the preceding claims 13 to 14, wherein the aeration tank (10) is connected to the separating chamber (20) by means of a conduit (12) for transferring treated water from the aeration tank (10) into the separating chamber (20), wherein the separating chamber (20) additionally comprises a return conduit (21) by means of which biodegradable material can be returned from the separating chamber (20) into the aeration tank.

## Revendications

1. Procédé de traitement d'eau dans une installation de traitement, comprenant les étapes suivantes :
amenée (11) d'eau à traiter où est présenté une matière biodégradable au moins en partie par des micro-organismes, dans un bassin à boues activées (10) faisant partie de l'installation de traitement ;
amenée directe de gaz (13) dans le bassin à boues activées (10) pour le traitement de l'eau ; et
évacuation (12) de l'eau traitée hors de la chambre de réaction (10) ;
où le gaz amené est au moins partiellement ionisé, et où
i) la part d'ions est comprise entre 1*10³ ions et 1*10¹⁰ ions par m³ de gaz, et
ii) la part d'ions est comprise entre 1*10³ et 1*10⁹ ions par gramme de substance sèche par heure de la matière biodégradable, et le gaz n'est pas de l'ozone.

2. Procédé selon la revendication 1, où le gaz au moins partiellement ionisé (13) est produit par ionisation de l'air et contient préférentiellement de l'oxygène ionisé.

3. Procédé selon l'une des revendications précédentes, où la teneur en dérivés ionisés de l'oxygène par rapport à la teneur totale en oxygène après ionisation est de moins de 0,2 %, préférentiellement de moins de 0,1%.

4. Procédé selon l'une des revendications précédentes, où un apport d'énergie de moins de 0,8 Watt par litre d'eau est exigé pour l'ionisation.

5. Procédé selon l'une des revendications précédentes, où une part d'ions, avantageusement en cas de fonctionnement continu, est au maximum de 1*10⁹ ions par gramme de substance sèche par heure de la matière biodégradable et des micro-organismes, préférentiellement au maximum de 1*10⁵ ions par gramme de substance sèche par heure, et où tout particulièrement moins de 1*10³ ions par gramme de substance sèche par heure d'amenée d'air sont alimentés pour l'alimentation en oxygène des micro-organismes.

6. Procédé selon l'une des revendications précédentes, où le degré d'ionisation de l'air est sélectionné de sorte que la valeur d'un indice de volume de boues (SVI) ne tombe pas sous 60 ml/g.

7. Procédé selon l'une des revendications précédentes, où une durée d'exposition au gaz ionisé dans le bassin à boues activées est au moins 5 minutes, en particulier au moins 10 minutes, préférentiellement au moins 15 minutes, et tout particulièrement l'exposition au gaz est effectuée pendant toute la durée de présence de l'eau dans le bassin à boues activées (10).

8. Procédé selon l'une des revendications précédentes, où l'évacuation (12) de l'eau traitée hors du bassin à boues activées (10) est effectuée vers un bassin de décantation/une chambre de séparation (20) en aval, et où un flux de retour à matière biodégradable et au moins une partie des micro-organismes s'écoule préférentiellement de la chambre de séparation (20) vers le bassin à boues activées (10) par une conduite de retour (21).

9. Procédé selon la revendication 8, où le flux de retour (21) reçoit de l'air ionisé.

10. Procédé selon l'une des revendications précédentes, où la capacité du bassin à boues activées (10) est d'au moins 1.000 m³, préférentiellement d'au moins 6.000 m³, et où le bassin à boues activées (10) reçoit préférentiellement un débit volumique d'eau à traiter tel que l'eau soit renouvelée dans un délai de 2 à 6 jours, en particulier de 3 à 5 jours dans le bassin à boues activées (10).

11. Procédé selon l'une des revendications précédentes, où la part de substance organique sèche dans l'eau du bassin à boues activées (10) est comprise entre 3 et 5 g/l.

12. Procédé selon l'une des revendications précédentes, où la part d'ions est comprise entre 1*10⁴ ions positifs par m³ de gaz et 1*10¹⁰ ions positifs par m³ de gaz.

13. Installation de traitement d'eau, comprenant :
un bassin à boues activées (10) pour la dégradation biologique de matière biodégradable par des micro-organismes ; et
un dispositif d'aération pour l'amenée directe de gaz dans le bassin à boues activées (10),
où le dispositif d'aération comprend un dispositif d'ionisation, prévu pour une ionisation au moins partielle du gaz à amener, si bien que
i) la part d'ions est comprise entre 1*10³ ions et 1*10¹⁰ ions par m³ de gaz, et
ii) est comprise entre 1*10³ et 1*10⁹ ions par gramme de substance sèche par heure de la matière biodégradable, le gaz n'étant pas de l'ozone.

14. Installation de traitement selon la revendication 13, où un bassin de décantation/une chambre de séparation (20) est situé(e) en aval du bassin à boues activées (10) pour la séparation au moins partielle de la matière biodégradable et des micro-organismes de l'eau (4).

15. Installation de traitement selon la revendication 13 ou la revendication 14, où le bassin à boues activées (10) est relié à la chambre de séparation (20) par une conduite (12) pour le transfert de l'eau traitée du bassin à boues activées (10) vers la chambre de séparation (20), la chambre de séparation (20) comportant en outre une conduite de retour (21) au moyen de laquelle la matière biodégradable peut être retournée de la chambre de séparation (20) vers le bassin à boues activées.
